# EUROPÄISCHE PATENTSCHRIFT

(11) **EP 1 193 434 B1**
(45) Veröffentlichungstag und Bekanntmachung des Hinweises auf die Patenterteilung: **13.12.2006**
(21) Anmeldenummer: 01203477.3
(22) Anmeldetag: 13.09.2001
(51) Int. Cl.: F16K 47/02

(54) **Ventil, insbesondere Heizkörperventil**
Valve, in particular radiator valve
Soupape, en particulier soupape de radiateur

(30) Priorität: 30.09.2000 DE 10048687
(43) Veröffentlichungstag der Anmeldung: 03.04.2002
(73) Patentinhaber: Danfoss A/S, 6430 Nordborg (DK)
(72) Erfinder: Messmer, James David, 8000 Aarhus (DK); Gregersen, Niels, 8464 Galten (DK); Larsen, Arne Boerge, 8660 Skanderborg (DK); Olsen, Brian Ottar, 8620 Kjellerup (DK); Larsen, Hans Erik, 8000 Aarhus C (DK)

(56) Entgegenhaltungen:
- BE-A- 396 464
- FR-A- 2 472 711
- US-A- 1 064 732
- US-A- 3 085 592

## Beschreibung

Die Erfindung betrifft ein Ventil, insbesondere Heizkörperventil mit einem Gehäuse, das einen Einlaßanschluß und einen Auslaßanschluß aufweist, wobei im Strömungsweg zwischen diesen beiden Anschlüssen eine Absperreinrichtung mit einem Ventilsitz und einem relativ dazu beweglichen Ventilelement angeordnet ist.

Ein derartiges als Heizkörperventil ausgebildetes Ventil ist aus WO 99/22282 bekannt. Ein Ventil gemäß dem Oberbegriff des Anspruchs ist aus der US-A-3,085,592 bekannt.

Üblicherweise ist bei einem derartigen Heizkörperventil die Durchströmrichtung vorgegeben und mit einem Pfeil auf der Außenseite des Gehäuses markiert. Die Durchströmrichtung sollte beachtet werden, um Störungen zu vermeiden, die sich vor allem durch unangenehme Geräusche bemerkbar machen. Normalerweise ist die ventilsitzseitige Seite der Absperreinrichtung mit dem Einlaßanschluß und die ventilelementseitige Seite der Absperreinrichtung mit dem Auslaßanschluß verbunden. Wenn das Ventilelement auf den Ventilsitz zu bewegt wird, findet eine allmähliche Drosselung des durchströmenden Wassers statt. Bei dieser "korrekten" Betriebsweise ergeben sich normalerweise keine Probleme.

Anders sieht es aus, wenn das Ventil falsch angeschlossen wird, d.h. die Speiseleitung eines Heizungssystem mit dem Auslaßanschluß verbunden wird. In diesem Fall strömt das Wasser über das Ventilelement zum Ventilsitz und von dort in den Einlaßanschluß. Wenn das Ventil schließt, wird das Ventilelement auf den Ventilsitz zu bewegt. Wenn der Spalt zwischen dem Ventilelement und dem Ventilsitz eine gewisse Größe unterschreitet, schließt das Ventilelement schlagartig, was einen ebenso plötzlichen Druckanstieg am Auslaßanschluß zur Folge hat. Dieser Druckanstieg äußert sich in einem Wasserschlag, der nicht nur unangenehme Geräusche zur Folge hat, sondern auch Beschädigungen im Leitungssystem hervorrufen kann. Dieser Wasserschlag kann aber auch durch einen externen Impuls ausgelöst werden, beispielsweise durch ein anderes Ventil, das plötzlich schließt oder öffnet, eine Pumpe, die anläuft oder stoppt, oder anderes. Diese Ursachen, die noch nicht alle restlos geklärt sind, sind besonders kritisch dann, wenn das Ventil falsch montiert ist.

Die Gefahr einer Fehlmontage von Heizkörperventilen ist nicht nur aufgrund von mangelnden Qualifikationen des Montagepersonals gegeben, sondern auch dann, wenn man in älteren Häusern oder Anlagen nicht mehr genau feststellen kann, welche Leitung zum Zufluß und welche zum Abfluß des Heizwassers verwendet wird.

Der Erfindung liegt die Aufgabe zugrunde, ein Ventil unabhängig von der Durchströmrichtung betreiben zu können.

Diese Aufgabe wird bei einem Heizkörperventil der eingangs genannten Art dadurch gelöst, daß zwischen dem Ausgangsanschluß und dem Eingangsanschluß ein zusätzliches Ventil angeordnet ist, das bei einer vorbestimmten Druckdifferenz vom Ausgangsanschluß zum Eingangsanschluß hin öffnet.

Mit dieser Ausgestaltung wird erreicht, daß ein Druckanstieg im Auslaßanschluß, der sich bei einer Schließbewegung des Ventilelements aufbauen kann, unmittelbar zum Eingangsanschluß abgebaut werden kann. Hierbei geht man davon aus, daß man im normalen Betrieb zwischen der Zulauf- und der Ablaufseite des Heizkörperventils keine größeren Druckunterschiede hat, weil auf beiden Seiten der im Heizungssystem vorhandene Druck herrscht. Lediglich beim Schließen des Heizkörperventils entsteht am Auslaßanschluß eine kurzzeitige Druckerhöhung, die wahrscheinlich darauf zurückzuführen ist, daß die sich bewegende Masse des Heizungswassers praktisch schlagartig abgebremst werden muß. Wenn man für diese Druckerhöhung ein zusätzliches Ventil vorsieht, das einen gewissen Anteil der Flüssigkeit von dem Auslaßanschluß zum Einlaßanschluß strömen läßt, dann kann diese Druckerhöhung sehr schnell abgebaut werden bzw. sie kommt erst gar nicht zum Entstehen. Wird das Heizkörperventil hingegen richtig herum betrieben, d.h. mit einer Durchströmung vom Einlaßanschluß zum Auslaßanschluß, dann stört das zusätzliche Ventil nicht weiter. Es bleibt geschlossen und zwar unabhängig davon, ob eine Druckdifferenz vom Eingangsanschluß zum Ausgangsanschluß besteht oder nicht. Die Angabe, daß das zusätzliche Ventil zwischen dem Ausgangsanschluß und dem Eingangsanschluß angeordnet ist, ist funktionell gemeint, d.h. sie soll keine Beschränkung auf einen bestimmten Ort der Anbringung bedeuten. Man kann damit auch eine Lösung realisieren, bei der das zusätzliche Ventil nicht direkt zwischen dem Eingang und dem Ausgang sitzt, sondern beispielsweise im Ausgang, wobei es dann mit Hilfe von geeigneten Mitteln, beispielsweise einem kleinen Schlauch, mit einer Stelle mit kleinerem Druck verbunden wird, beispielsweise dem Eingang oder einem Heizkörper.

Vorzugsweise weist das Ventil eine Schließfeder auf. Mit Hilfe der Schließfeder kann man die Druckdifferenz einstellen, bei der das Ventil öffnet. Außerdem stellt die Schließfeder sicher, daß das Ventil im Normalbetrieb schließt, so daß dann, wenn das Ventilelement am Ventilsitz anliegt, das Heizkörperventil insgesamt dicht ist.

Bevorzugterweise ist das Ventil in die Absperreinrichtung integriert. Diese Vorgehensweise hat den Vorteil, daß man am Gehäuse des Heizkörperventils keine oder nur kleine Änderungen vornehmen muß. Dies vereinfacht die Fertigung.

Hierbei ist besonders bevorzugt, daß das Ventilelement mit einem Betätigungsstrang verbunden ist und das Ventil in dem Betätigungsstrang angeordnet ist. Damit ist für das Ventil kein zusätzlicher Bauraum erforderlich.

Die Strömungsverhältnisse können im Normalbetrieb weltgehend unverändert bleiben.

Vorzugsweise ist das Ventilelement gegenüber einem Abschnitt des Betätigungsstranges in Schließrichtung voreilend bewegbar und in voreilender Position ist ein Nebenstrompfad geöffnet. Diese Ausbildung hat mehrere Vorteile. Wenn das Heizkörperventil richtig herum angeschlossen ist, ergibt sich keine Veränderung gegenüber einem herkömmlichen Heizkörperventil. Wenn das Heizkörperventil verkehrt angeschlossen ist, d.h. die Heizflüssigkeit am Auslaßanschluß zuströmt, dann wird das Ventilelement im letzten Abschnitt seiner Bewegung auf den Ventilsitz zu schlagartig auf den Ventilsitz gedrückt, wie oben bereits erläutert worden ist. Wenn man nun eine voreilende Bewegung des Ventilelementes gegenüber dem Betätigungsstrang zuläßt, dann verhindert man, daß dieses schlagartige Niederdrücken des Ventilelements auf den Ventilsitz zu einer Beschädigung des Betätigungsstranges führt. Darüber hinaus nutzt man diese Absenkbewegung des Ventilelements aus, um das zusätzliche Ventil zu öffnen, d.h. einen Nebenstrompfad freizugeben, über den ein Druckabbau vom Auslaßanschluß zum Einlaßanschluß erfolgen kann. Der Abschnitt des Betätigungsstranges wird das Ventilelement zwar in kurzer Zeit wieder einholen. In dieser Zeit war der Nebenstrompfad aber geöffnet, was ausreicht, um den gewünschten Druckabbau zu bewirken.

Auch ist bevorzugt, daß die voreilende Bewegung gegen die Kraft einer Feder erfolgt. Auch diese Ausgestaltung hat mehrere Vorteile. Zum einen wird die voreilende Bewegung etwas gedämpft, so daß der Aufprall des Ventilelements auf dem Ventilsitz mit einer verringerten Geschwindigkeit erfolgt. Zum anderen wird sichergestellt, daß das Ventilelement wieder gegen den Abschnitt des Betätigungsstranges bewegt wird. Schließlich ist die Feder so dimensioniert, daß eine Bewegung nur dann erfolgt, wenn eine vorbestimmte Kraft auf das Ventilelement wirkt. Im Normalfall bleibt das Ventilelement also mit dem Abschnitt des Betätigungsstranges verbunden.

Mit Vorteil liegt das Ventilelement unter Wirkung der Feder an einem Ventilstößel an, wobei der Ventilstößel in Schließrichtung unmittelbar und in Öffnungsrichtung über die Feder auf das Ventilelement wirkt. Das Ventilelement ist also gegen die Kraft der Feder vom Ventilstößel weg bewegbar. Dies ist eine einfache Möglichkeit, um die voreilende Bewegung zu realisieren.

Hierbei ist besonders bevorzugt, daß der Ventilstößel eine Öffnung im Ventilelement verschließt, wenn das Ventilelement am Ventilstößel anliegt. Die Öffnung ist also nur solange offen, wie das Ventilelement vom Ventilstößel entfernt ist, also während der Dauer der voreilenden Bewegung. Wenn der Ventilstößel das Ventilelement "eingeholt" hat, dann ist das zusätzliche Ventil verschlossen.

Hierbei ist besonders bevorzugt, daß zwischen Ventilelement und Ventilstößel eine Dichtscheibe angeordnet ist. Diese Dichtscheibe stellt sicher, daß das Heizkörperventil im geschlossenen Zustand tatsächlich keinen Flüssigkeitszutritt erlaubt.

In einer alternativen Ausgestaltung kann vorgesehen sein, daß der Ventilstößel einen Kanal aufweist, der an einem Ende zum Einlaßanschluß hin öffnet und am anderen Ende durch den Abschnitt des Betätigungsstranges verschließbar ist. In diesem Fall kann der Abschnitt des Betätigungsstranges beispielsweise durch ein Betätigungsglied einer Stopfbuchse gebildet sein, daß seinerseits wieder von einem allgemein üblichen Thermostataufsatz gesteuert wird. Eine zusätzliche Rückstell- oder Schließfeder ist dann nicht erforderlich, weil deren Funktion von der Hauptfeder des Heizkörperventils, die normalerweise in Öffnungsrichtung wirkt, übernommen wird.

Die Erfindung wird im folgenden anhand eines bevorzugten Ausführungsbeispiels in Verbindung mit der Zeichnung näher beschrieben. Hierin zeigen:
- Fig. 1: eine erste Ausführungsform eines Heizkörperventils,
- Fig. 2: eine zweite Ausführungsform eines Heizkörperventils und
- Fig. 3: eine dritte Ausführungsform eines Heizkörperventils.

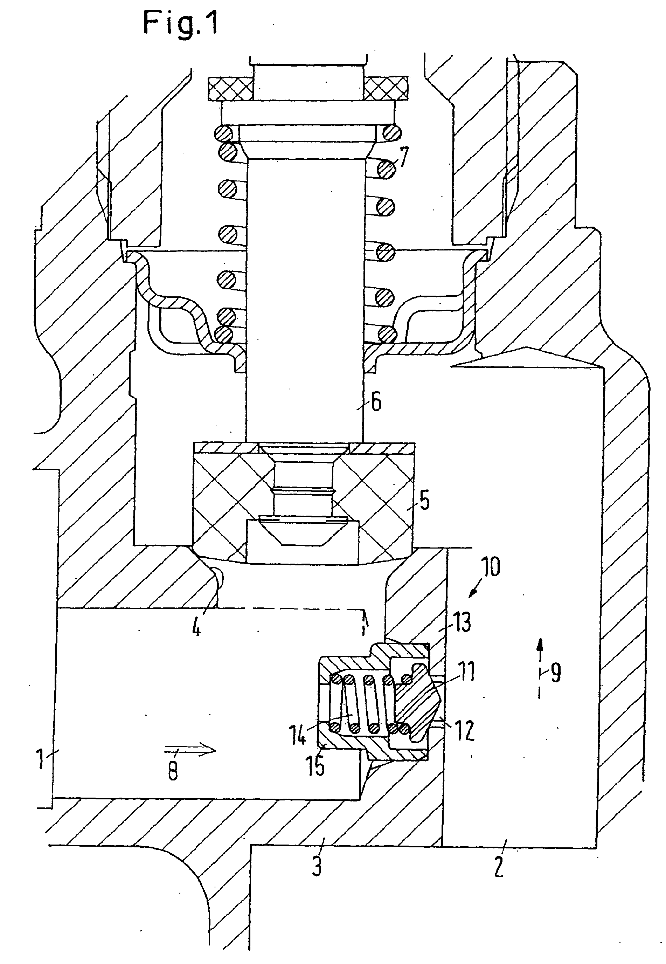

Fig. 1 zeigt schematisch ein Heizkörperventil mit einem Einlaßanschluß 1 und einem Auslaßanschluß 2 in einem Gehäuse 3. Zwischen dem Einlaßanschluß 1 und dem Auslaßanschluß 2 ist ein Ventilsitz 4 im Gehäuse angeordnet, mit dem ein Ventilelement 5 zusammenwirkt, das an einem Ventilstößel 6 befestigt ist, der von einer nicht näher dargestellten Betätigungseinrichtung, beispielsweise einem thermostatischen Ventilaufsatz, gesteuert werden kann. Eine Feder 7 wirkt so mit dem Ventilstößel zusammen, daß ohne Einwirkung äußerer Kräfte das Ventilelement 5 vom Ventilstößel 6 angehoben wird.

Normalerweise sollte das in Fig. 1 dargestellte Heizkörperventil vom Einlaßanschluß 1 zum Auslaßanschluß 2 in Richtung eines Pfeiles 8 durchströmt werden. Dabei gelangt das heiße Wasser (oder eine andere Heizungsflüssigkeit) von der Seite des Ventilsitzes 4 her an das Ventilelement 5. Solange zwischen diesen beiden Teilen ein Spalt oder eine Öffnung besteht, kann das Wasser ungehindert zum Auslaßanschluß 2 abströmen. Wenn das Heizkörperventil geschlossen wird, wird das Ventilelement 5 auf den Ventilsitz 4 zu bewegt. Dabei erfolgt eine allmähliche Drosselung des Flüssigkeitsstromes. Ein derartiger Betrieb ist in der Regel ohne Probleme möglich.

Anders sieht es aus, wenn das Heizkörperventil verkehrt angeschlossen ist, d.h. die Strömung der Heizungsflüssigkeit vom Auslaßanschluß 2 zum Einlaßanschluß erfolgt, wie dies durch einen gestrichelten Pfeil 9 angedeutet ist. Im geöffneten Zustand des Heizkörperventils gibt es hierbei keine Probleme. Probleme treten auf beim Schließen des Heizkörperventils, wenn das Ventilelement 5 auf den Ventilsitz 4 zu bewegt wird. Wenn sich der Spalt zwischen diesen beiden Teilen bis auf einen kleinen Rest verringert hat, dann setzt das Ventilelement 5 schlagartig auf dem Ventilsitz 4 auf, was wahrscheinlich auf die zuströmende Heizungsflüssigkeit zurückzuführen ist. Dadurch entsteht im Auslaßanschluß 2 ein Druckstoß, der auch als "Wasserschlag" bekannt ist. Dieser Wasserschlag führt einerseits zu Geräuschen und beinhaltet andererseits das Risiko, daß Anlagenteile beschädigt werden. Um diesen Wasserschlag zu dämpfen oder sogar zu beseitigen, ist zwischen dem Auslaßanschluß 2 und dem Einlaßanschluß 1 ein zusätzliches Ventil 10 vorgesehen, daß vom Auslaßanschluß 2 zum Einlaßanschluß 1 hin öffnet. Das Ventil 10 weist ein Schließelement 11 auf, das eine Öffnung 12 in einer Gehäusewand 13 verschließt, die zwischen dem Auslaßanschluß 2 und dem Einlaßanschluß 1 vorgesehen ist. Das Schließelement 11 ist von einer Feder 14 in Richtung auf die Öffnung 12 belastet, die sich ihrerseits an einem Käfig 15 abstützt, der in der Gehäusewand 13 befestigt ist.

Die Feder 14 ist so gewählt, daß das Schließelement 11 die Öffnung 12 bei einem vorbestimmten Differenzdruck zwischen dem Auslaßanschluß 2 und dem Einlaßanschluß 1 freigibt. Dieser Differenzdruck wiederum ist so gewählt, daß das Ventil 10 im normalen Zustand, also wenn das Heizkörperventil durch Zusammenwirken des Ventilelements 5 mit dem Ventilsitz 4 geöffnet oder geschlossen ist, nicht öffnet, sondern nur beim oder kurz nach dem Auftreffen des Ventilelements 5 auf dem Ventilsitz 4 öffnet, um den dann entstehenden Druckstoß abzubauen. Dementsprechend öffnet das Ventil 10 auch nur kurz. Die relativ kleinen Wassermengen, die dabei entweichen können, reichen aus, um den Druck im Auslaßanschluß 2 ausreichend zu verringern.

Das in Fig. 1 dargestellte zusätzliche Ventil hat einen weiteren Vorteil. Wenn beispielsweise ein Heizkörper am Einlaßanschluß 1 angeschlossen ist, in dem der Druck aus irgendwelche Gründen abfällt, beispielsweise aufgrund einer Leckage, dann würde der Druck im Auslaßanschluß 2 relativ dazu ansteigen. Das Ventil 10 würde öffnen und das Wasser könnte aus dem Heizungssystem in unbeabsichtigter Weise abfließen. In der vorliegenden Ausführungsform verschiebt sich aber der Kegel 11 so weit, daß er gegen den Käfig 15 zur Anlage kommt und dort abdichtet und somit eine eventuelle Leckage verhindert. Eine derartige Anlage ist bei einem "Wasserschlag", der in der Regel nur durch einen kurzen Impuls gebildet wird, nicht möglich.

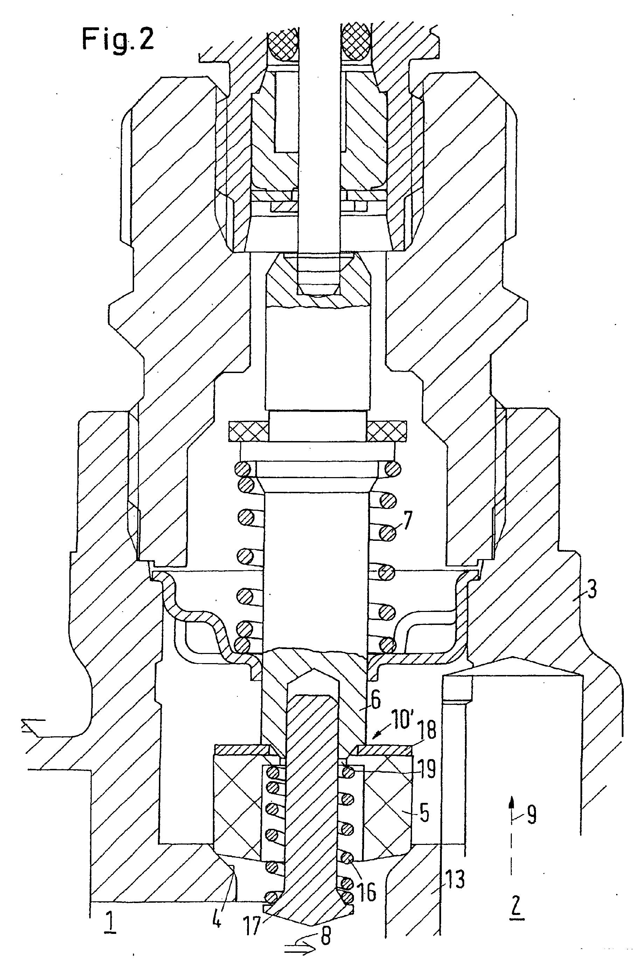

Fig. 2 zeigt eine andere Ausführungsform, bei der gleiche Teile mit gleichen Bezugszeichen versehen sind.

Das Ventil 10' ist hierbei in einem Betätigungsstrang angeordnet, mit dem das Ventilelement 5 auf den Ventilsitz zu oder davon weg bewegt wird. Hierzu ist das Ventilelement 5 nicht fest mit dem Ventilstößel 6 verbunden, sondern das Ventilelement 5 wird mit Hilfe einer Feder 16 gegen den Ventilstößel gespannt, die sich an einem in die Stirnseite des Stößels 6 eingeschraubten Halter 17 abstützt. Zwischen dem Ventilelement 5 und dem Ventilstößel 6 ist noch eine Stützscheibe 18 angeordnet. Das Ventilelement 5 weist eine zentrische Bohrung 19 auf, durch die der Halter 17 geführt ist, wobei die Bohrung 19 einen größeren Durchmesser als der Halter 17 aufweist, so daß zwischen dem Ventilelement 5 und dem Halter 17 ein Ringspalt verbleibt.

Aufgrund dieser Konstruktion betätigt der Ventilstößel 6 das Ventilelement 5 in Schließrichtung unmittelbar, in Öffnungsrichtung hingegen nur über die Feder 16. Das Ventilelement 5 kann daher vom Ventilstößel 6 gegen die Kraft der Feder 16 weg bewegt werden. Diese Bewegungsmöglichkeit wird zum Vermeiden des Wasserschlags genutzt.

Wenn das Wasser in Richtung des Pfeiles 9 vom Auslaßanschluß 2 zum Einlaßanschluß 1 strömt und das Ventilelement 5 auf den Ventilsitz zu bewegt wird, dann erfolgt bei Erreichen einer vorbestimmten Spalthöhe zwischen dem Ventilsitz 4 und dem Ventilsitz 5 ein schlagartiges Aufsitzen des Ventilelements 5 auf dem Ventilsitz 4. Aufgrund der Feder 16 wird jedoch der Ventilstößel 6 nicht unmittelbar nachgeführt, sondern das Ventilelement 5 eilt dem Ventilstößel 6 kurzzeitig voraus. Dabei entsteht zwischen dem Ventilelement 5 und dem Ventilstößel bzw. zwischen der Stützscheibe 18 und dem Ventilstößel 6 eine Lücke, die einen Strömungspfad vom Auslaßanschluß 2 zum Einlaßanschluß 1 bildet. Durch diesen Strömungspfad kann der Druck zum Eingangsanschluß 1 hin angebaut werden. Hierzu reicht die Zeit aus, die zur Verfügung steht, bis der Ventilstößel 6 das Ventilelement 5 eingeholt hat. Aufgrund der Dichtungsscheibe 18 wird dieser Strömungspfad dann wieder verschlossen, so daß das Heizkörperventil "dicht" ist.

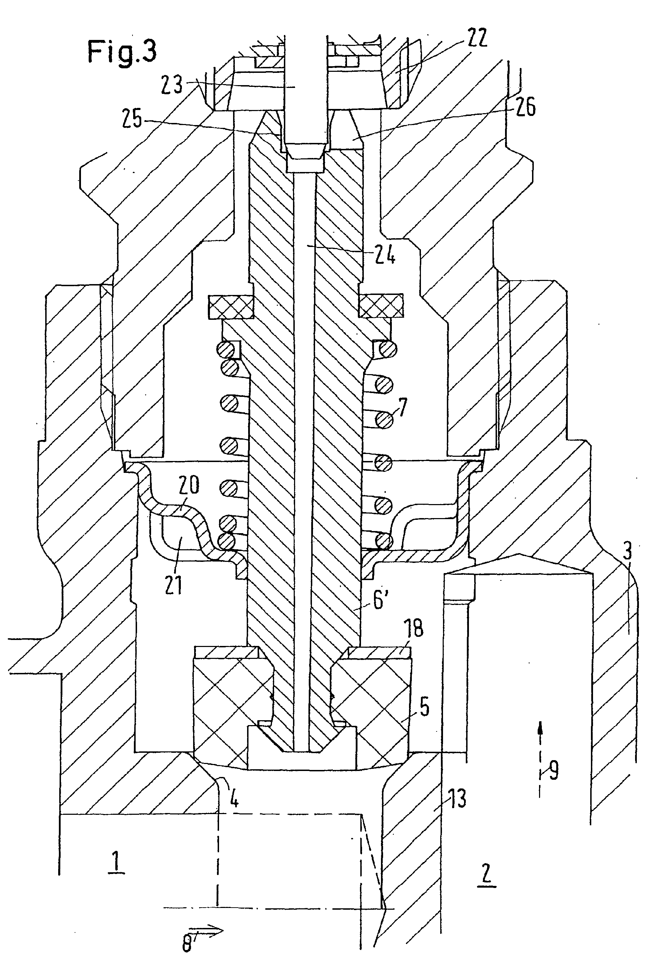

Fig. 3 zeigt eine dritte Ausgestaltung, bei der gleiche Teile mit gleichen Bezugszeichen versehen sind.

Das Ventilelement 5 ist mit dem Ventilstößel 6' fest verbunden, wobei auch hier eine Dichtungsscheibe 18 zwischengeschaltet sein kann. Der Ventilstößel 6' ist über eine Feder 7 an einem Käfig 20 abgestützt, der im Gehäuse 3 aufgehängt ist. Der Käfig 20 weist Durchtrittsöffnungen 21 auf, so daß das Heizungswasser das gesamte Innere des Gehäuses 3 ausfüllen kann und bis zu einer nur schematisch dargestellten Stopfbuchse 22 gelangt, durch die ein Betätigungsstift 23 geführt ist.

Der Ventilstößel 6' weist einen durchgehenden Kanal 24 auf, der in den Einlaßanschluß 1 mündet. Das andere Ende des Kanals 24 wird durch den Betätigungsstift 23 verschlossen. Der Betätigungsstift 23 ist hierbei in einer Erweiterung 25 des Kanals 24 geführt, so daß der Ventilstößel 6' gegenüber dem Betätigungsstift 23 bewegbar ist. Die Erweiterung 25 hat eine seitliche Öffnung 26, die mit dem Innenraum des Gehäuses 3 in Verbindung steht. Der Ventilstößel 6' wird durch die Feder 7 in Öffnungsrichtung vorgespannt, d.h. auf den Betätigungsstift 23 zu. Der Betätigungsstift 23 kann wiederum durch ein nicht näher dargestelltes Betätigungselement, beispielsweise einen Thermostataufsatz, nach unten gedrückt werden, um das Heizkörperventil zu schließen.

Die Funktionsweise dieser Ausführungsform ist ähnlich zu der in Fig. 2 gezeigten. Wenn das Ventilelement 5 auf den Ventilsitz zu bewegt wird und die Durchströmung vom Auslaßanschluß 2 zum Einlaßanschluß 1 erfolgt, dann erfolgt ein schlagartiges Absenken des Ventilelements 5 auf den Ventilsitz 4, wenn der Spalt zwischen diesen beiden Teilen einen gewissen Grenzwert erreicht hat. Hierbei zieht das Ventilelement 5 den Ventilstößel 6' mit sich, hebt ihn also kurzzeitig vom Betätigungsstift 23 ab. Dadurch bekommt der Kanal 24 Verbindung mit dem Innenraum des Gehäuses 3, so daß Heizungswasser durch den Kanal zum Einlaßanschluß 1 abfließen kann, obwohl das Ventilelement 5 bereits am Ventilsitz anliegt. Der Abfluß ist solange möglich, bis der Betätigungsstift 23 den Kanal 24 wieder abdichtet. Dieser Zeitraum reicht aus, um den gewünschten Druckabbau zu bewirken.

## Patentansprüche

1. Heizkörperventil mit einem Gehäuse, das einen Einlassanschluss und einen Auslassanschluss aufweist, wobei im Strömungsweg zwischen diesen beiden Anschlüssen eine Steuereinrichtung mit einem Ventilsitz und einem relativ dazu beweglichen, mit einem Betätigungsstrang verbundenen Ventilelement angeordnet ist, das durch eine Feder vom Ventilsitz weg belastet ist, wobei zwischen dem Ausgangsanschluss (2) und dem Eingangsanschluss (1) ein zusätzliches Ventil (10, 10') angeordnet ist, das bei einer vorbestimmten Druckdifferenz vom Ausgangsanschluss (2) zum Eingangsanschluss (1) hin öffnet; **dadurch gekennzeichnet, dass** das Ventilelement (5) oder das Ventilelement (5) und ein Ventilstössel (6) gegenüber dem Rest des Betätigungsstranges in Schliessrichtung voreilend bewegbar ist bzw. sind.

2. Ventil nach Anspruch 1, **dadurch gekennzeichnet, daß** das Ventil (10, 10') eine Schließfeder (14, 16) aufweist.

3. Ventil nach Anspruch 1 oder 2, **dadurch gekennzeichnet, daß** das Ventil (10') in die Absperreinrichtung integriert ist.

4. Ventil nach Anspruch 3, **dadurch gekennzeichnet, daß** das Ventilelement (5) mit einem Betätigungsstrang verbunden ist und daß das Ventil (10') in dem Betätigungsstrang angeordnet ist.

5. Ventil nach Anspruch 4, **dadurch gekennzeichnet, daß** in voreilender Position ein Nebenstrompfad geöffnet ist.

6. Ventil nach Anspruch 6, **dadurch gekennzeichnet, daß** die voreilende Bewegung gegen die Kraft einer Feder (7, 16) erfolgt.

7. Ventil nach Anspruch 6, **dadurch gekennzeichnet, daß** das Ventilelement (5) unter der Wirkung der Feder (16) an einem Ventilstößel (6) anliegt, wobei der Ventilstößel (6) in Schließrichtung unmittelbar und in Öffnungsrichtung über die Feder (16) auf das Ventilelement wirkt.

8. Ventil nach Anspruch 7, **dadurch gekennzeichnet, daß** der Ventilstößel (6) eine Öffnung (19) im Ventilelement (5) verschließt, wenn das Ventilelement (5) am Ventilstößel (6) anliegt.

9. Ventil nach Anspruch 7 oder 8, **dadurch gekennzeichnet, daß** zwischen Ventilelement (5) und Ventilstößel (6) eine Dichtscheibe (18) angeordnet ist.

10. Ventil nach Anspruch 5 oder 6, **dadurch gekennzeichnet, daß** der Ventilstößel (6') einen Kanal (24) aufweist, der an einem Ende zum Einlaßanschluß (1) hin öffnet und am anderen Ende durch den Abschnitt (23) des Betätigungsstranges verschließbar ist.

## Claims

1. Radiator valve with a housing having an inlet connection and an outlet connection, a control device being located between these two connections, the control device having a valve seat and a valve element, movable in relation to the valve seat and connected to an activation string, the valve element being loaded by a spring away from the valve seat, an additional valve being located between the outlet connection and the inlet connection and opening at a predetermined pressure difference from the outlet connection in the direction of the inlet connection, **characterised in that** the valve element (5) or the valve element (5) and a valve tappet (6) is/are movable ahead of the rest of the activation string in the closing direction.

2. Valve according to claim 1, **characterised in that** the valve (10, 10') has a closing spring (14, 16).

3. Valve according to claim 1 or 2, **characterised in that** the valve (10') is integrated in the closing arrangement.

4. Valve according to claim 3, **characterised in that** the valve element (5) is connected with the activation string and that the valve (10') is located in the activation string.

5. Valve according to claim 4, **characterised in that** in the hastened position a bypass flow path is open.

6. Valve according to claim 5, **characterised in that** the hastened movement occurs against the force of a spring (7, 16).

7. Valve according to claim 6, **characterised in that** under the influence of the spring (16) the valve element (5) rests on a valve tappet (6), the valve tappet (6) acting directly upon the valve element in the closing direction and via the spring (16) in the opening direction.

8. Valve according to claim 7, **characterised in that** the valve tappet (6) closes an opening (19) in the valve element (5), when the valve element (5) rests on the valve tappet (6).

9. Valve according to claim 7 or 8, **characterised in that** a sealing disc (18) is located between the valve element (5) and the valve tappet (6).

10. Valve according to claim 5 or 6, **characterised in that** the valve tappet (6') has a channel (24) opening in one end towards an inlet connection (1) and being closable in the other end by the section (23) of the activation string.

## Revendications

1. Soupape de radiateur avec un logement qui présente un raccordement d'entrée et un raccordement de sortie, dans lequel, dans une voie d'écoulement entre ces deux raccords, est agencé un dispositif de commande avec un siège de soupape et un élément de soupape, raccordé à une tige d'actionnement mobile, par rapport à celui-ci, et qui est contraint par un ressort du siège de soupape en éloignement de ce dernier, entre le raccord de sortie (2) et le raccord d'entrée (1), est agencée une soupape supplémentaire (10, 10') qui s'ouvre, lors d'une différence de pression prédéterminée, par rapport au raccord d'entrée (2) sur le raccord d'entrée (1), **caractérisée en ce que** l'élément de soupape (5), ou l'élément de soupape (5) et un coulisseau de soupape (6), est ou sont mobile vers l'avant dans la direction de fermeture par rapport au reste de la tige d'actionnement.

2. Soupape selon la revendication 1, **caractérisée en ce que** la soupape (10, 10') comporte un ressort de fermeture (14, 16).

3. Soupape selon la revendication 1 ou 2,
**caractérisée en ce que** la soupape (10') est intégrée dans la direction d'obturation.

4. Soupape selon la revendication 3, **caractérisée en ce que** l'élément de soupape (5) est raccordé à une tige d'actionnement et **en ce que** la soupape (10') est disposée dans la tige d'actionnement.

5. Soupape selon la revendication 4, **caractérisée en ce que**, dans la position avancée, s'ouvre une voie d'écoulement auxiliaire.

6. Soupape selon la revendication 6, **caractérisée en ce que** le mouvement d'avance s'effectue en opposition à la force d'un ressort (7, 16).

7. Soupape selon la revendication 6, **caractérisée en ce que** l'élément de soupape (5) s'appuie, sous l'action du ressort (16), sur un coulisseau de soupape (6), le coulisseau de soupape (6) agissant directement dans la direction d'ouverture par l'intermédiaire du ressort (16) sur l'élément de soupape.

8. Soupape selon la revendication 7, **caractérisée en ce que** le coulisseau de soupape (6) ferme une ouverture (19) dans l'élément de soupape (5) lorsque l'élément de soupape (5) s'appuie sur le coulisseau de soupape (6).

9. Soupape selon la revendication 7 ou 8,
**caractérisée en ce qu'**entre l'élément de soupape (5) et le coulisseau de soupape (6), est agencée une rondelle d'étanchéité (18).

10. Soupape selon la revendication 5 ou 6,
**caractérisée en ce que** le coulisseau de soupape (6') présente un canal (24) qui s'ouvre sur une extrémité et est verrouillable par le tronçon (23) de la tige d'actionnement.
